# EUROPEAN PATENT SPECIFICATION

(11) **EP 4 093 590 B1**
(45) Date of publication and mention of the grant of the patent: **24.07.2024**
(21) Application number: 20701459.8
(22) Date of filing: 21.01.2020
(51) Int. Cl.: B29C 44/12, B60N 2/00, B29C 33/12, B29L 31/58, B29L 31/00, B60N 2/68, B60N 2/70

(54) **PROCESS FOR MANUFACTURING A FOAM ARTICLE WITH AN INSERT**
VERFAHREN ZUR HERSTELLUNG EINES SCHAUMSTOFFARTIKELS MIT EINEM EINSATZ
PROCÉDÉ DE FABRICATION D'UN ARTICLE EN MOUSSE DOTÉ D'UN INSERT

(43) Date of publication of application: 30.11.2022
(73) Proprietor: Toyota Motor Europe, 1140 Brussels (BE)
(72) Inventor: BUEDTS, Benny, 1140 BRUSSELS (BE); SPAEPEN, Didier, 1140 BRUSSELS (BE)
(74) Representative: Cabinet Beau de Loménie
(86) International application number: PCT/EP2020/051440
(87) International publication number: WO 2021/148111

(56) References cited:
- FR-A1- 2 889 495
- JP-A- 2015 173 786
- US-A1- 2016 375 808
- US-A1- 2019 030 765

## Description

### TECHNICAL FIELD

The disclosure relates to a process for manufacturing a foam article, such as those used for cushioning, and in particular for seat cushions.

### BACKGROUND

Foam articles may incorporate embedded inserts to provide strengthening and/or interfaces for attachment, as disclosed for instance in US Patent Application Publication US 2016/0375808 A1. When producing such foam articles using molding processes, the insert may be introduced into the mold cavity before being overmolded with the foam, thus incorporating the insert into the foam article in a single step, with minimum cost, as disclosed for instance in French Patent Application Publication FR 2 889 495 A1. However, under certain circumstances, such as when the insert is to provide a mechanical interface for attaching the foam article to another element, is may be desirable for part of the embedded insert to emerge from the foam, as disclosed for instance in US Patent Application Publication US 2019/0030765 A1. In order to achieve this, when the insert is incorporated into the foam article in a foam molding process, it has been proposed to install a barrier within the mold cavity to seal off from the foam, during the foam molding process, a volume of the mold cavity where the emerging part of the insert is received, as disclosed for instance in Japanese Patent Application Laid-Open JP 2015-173786 A. This, however, adds complexity and cost to the foam molding process.

### SUMMARY

A first object of the disclosure is that of providing a simple, inexpensive process for manufacturing a foam article with an embedded insert, so that a surface of the insert emerges from the foam in the resulting foam article, to provide, for example, a mechanical attachment interface.

According to a first aspect, the process may comprise a foam molding step in which a foam material is molded within a mold while the insert is held under elastic stress against an inner surface of the mold, so that the surface of the insert in contact with the inner surface of the mold during the foam molding step may not be covered by the foam, emerging thus from the foam in the resulting foam article.

The insert may in particular be elongated, and be held under elastic bending stress against the inner surface of the mold during the foam molding step. It may in particular be a metal wire, in which case it may be magnetically held to maintain a correct position during the foam molding step. The insert may be held within a notch in the mold, and the inner surface of the mold against which the insert is held under elastic bending stress may be a side surface of the notch. In this case, to exert the elastic bending stress on the insert within the notch which holds the insert against the side surface of the notch, the insert may comprise at least two segments at an angle to each other in an unstressed state of the insert, and the notch may comprise two corresponding segments at a different angle to each other. When the insert is received into the notch, the elastic bending of the insert to adapt it to the different angle of the notch may thus force the insert locally against the side of the notch. The insert may comprise further segments at angles to each other, and in particular be U-shaped.

The process may further comprise an assembly step wherein a solid body is attached to the insert after the foam molding step. This solid body may be a sensor. In particular, the foam article may be a seat cushion and the solid body an occupant detection sensor.

The above summary of some example embodiments is not intended to describe each disclosed embodiment or every implementation of the invention. In particular, selected features of any illustrative embodiment within this specification may be incorporated into an additional embodiment unless clearly stated to the contrary.

### BRIEF DESCRIPTION OF THE DRAWINGS

The invention may be more completely understood in consideration of the following detailed description of various embodiments in connection with the accompanying drawings, in which:
- FIG. 1 is an exploded perspective view of a vehicle seat cushion with a metal wire insert and occupancy detection sensors;
- FIG. 2 is a lower plan view of the vehicle seat cushion of FIG. 1;
- FIG. 3 is a detail cut view of the attachment of a occupancy detection sensor attached to the partially exposed metal wire insert on a lower surface of the vehicle seat cushion of FIG. 1;
- FIG. 4 schematically illustrates how the occupancy detection sensor is attached to the metal wire;
- FIG. 5 is a detail view of a raised area in a mold cavity for molding the vehicle seat cushion of FIG. 1, with a notch for receiving a U-shaped part of the metal wire insert;
- FIG. 6 illustrates the U-shaped part of the metal wire insert in an unstressed state;
- FIG. 7 illustrates the raised area and notch of FIG. 3 with the U-shaped part of the metal wire insert under bending stress;
- FIGS. 8, 9 and 10 are cut views of the raised area, notch and metal wire insert of FIG. 7 in planes VIII-VIII, IX-IX and X-X, respectively, as the metal wire insert is introduced into the notch;
- FIGS. 11 and 12 are detail views of the raised area, notch and metal wire insert in planes IX-IX and X-X,, respectively, at the end of a subsequent foam molding step.

While the invention is amenable to various modifications and alternative forms, specifics thereof have been shown by way of example in the drawings and will be described in detail. It should be understood, however, that the intention is not to limit aspects of the invention to the particular embodiments described.

### DETAILED DESCRIPTION

For the following defined terms, these definitions shall be applied, unless a different definition is given in the claims or elsewhere in this specification.

As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

The following detailed description should be read with reference to the drawings in which similar elements in different drawings are numbered the same. The detailed description and the drawings, which are not necessarily to scale, depict illustrative embodiments and are not intended to limit the scope of the invention. The illustrative embodiments depicted are intended only as exemplary. Selected features of any illustrative embodiment may be incorporated into an additional embodiment unless clearly stated to the contrary.

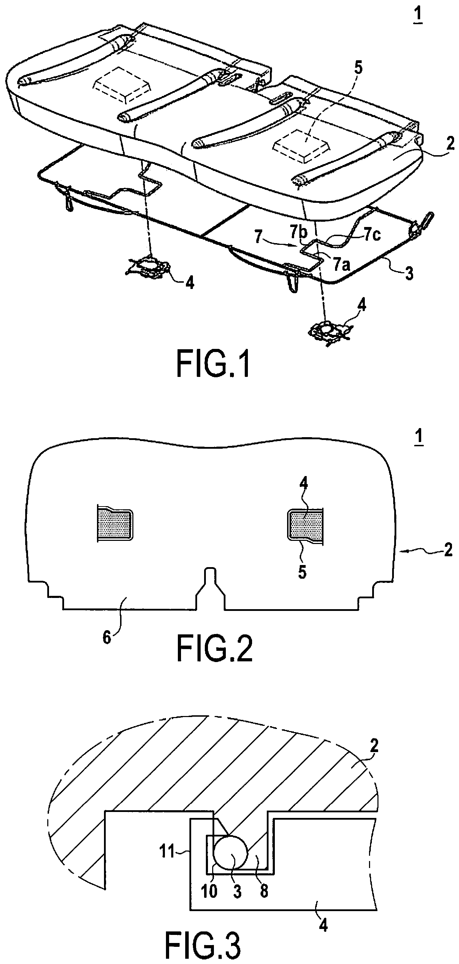

A foam article 1, in the form of a seat cushion, and in particular of a vehicle seat cushion such as a rear bench passenger car seat cushion, is shown in FIG. 1. Such a foam article 1 may comprise a foam material 2, and, embedded within this foam material 2, an insert 3. The foam material 2 may be an organic polymer foam material such as polyurethane foam. The insert 3 may be an elongated insert 3, for example in the form of a metal wire, and in particular a ferromagnetic metal wire. The foam article 1 may further provide one or more solid bodies 4 attached to the insert 3, for example through a snap connection. These solid bodies 4 may be sensors, and more specifically occupancy detection sensors configured to detect whether a person is sitting on the foam article 1 when it is built as a seat cushion into a vehicle seat. Such an occupancy detection sensor may be used for instance to activate a warning if the corresponding seatbelt is not buckled. The solid bodies 4 may be located outside of the foam material 2, and in particular may be received in corresponding cavities 5 formed in an underside 6 of the foam material 2, as shown in FIG. 2. A part 7 of each insert 3 may be embedded into a corresponding rib 8 of the foam material 2 protruding into one of the cavities 5. This part 7 of the insert 3 may comprise successive segments at angles to each other. This part 7 may for example be U-shaped, with a first segment 7a, a second segment 7b, and a third segment 7c bent at angles to each other.

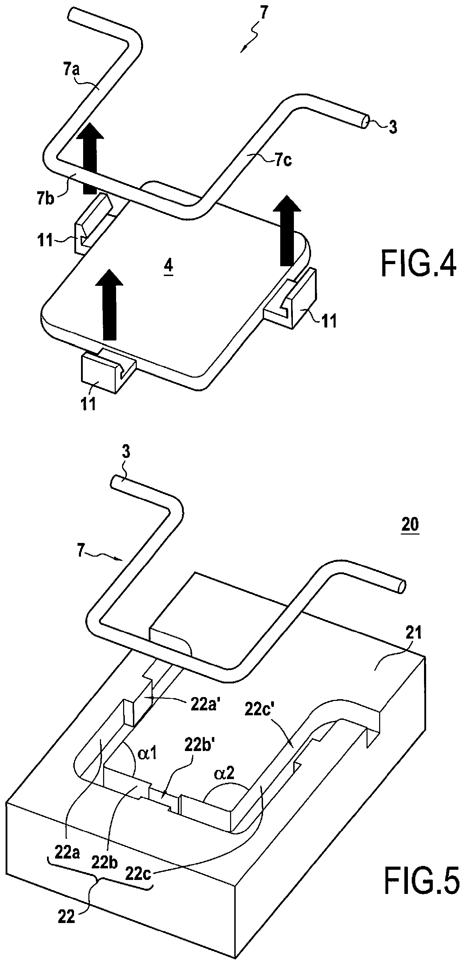

FIG. 3 shows how a surface 10 of the insert 3 may emerge from the foam material 2, in particular in said ribs 8, to facilitate the attachment of the solid bodies 4 to the insert 3, for instance with elastic hooks 11 snapping onto the exposed surface 10 of the insert 3 and biting into the foam material 2 behind. With three such hooks 11, each engaging one segment 7a,7b or 7c of the U-shaped part 7, as shown in FIG. 4, it is possible to establish a stable attachment of the solid body 4 to the insert 3.

In a first step of a process for manufacturing the foam article 1, the insert 3 may be introduced into a mold 20. As shown in FIG. 5, the mold 20 may comprise a raised inner surface 21 to form the cavity 5 in the foam material 2. Furthermore, said raised inner surface 21 may include a notch 22 to form the rib 8. This notch 22 may also comprise successive segments at angles to each other. In particular, it may also be U-shaped, with a first segment 22a bent at an angle α₁ with respect to a second segment 22b, and a third segment 22c bent at an angle α₂ with respect to a second segment 22b, which may be identical to the angle α₁ between the first and second segments 22a, 22b. Each segment 22a, 22b, 22c may comprise a narrower central portion 22a', 22b', 22c'. The mold 20 may also comprise magnets 25 adjacent to the notch 22.

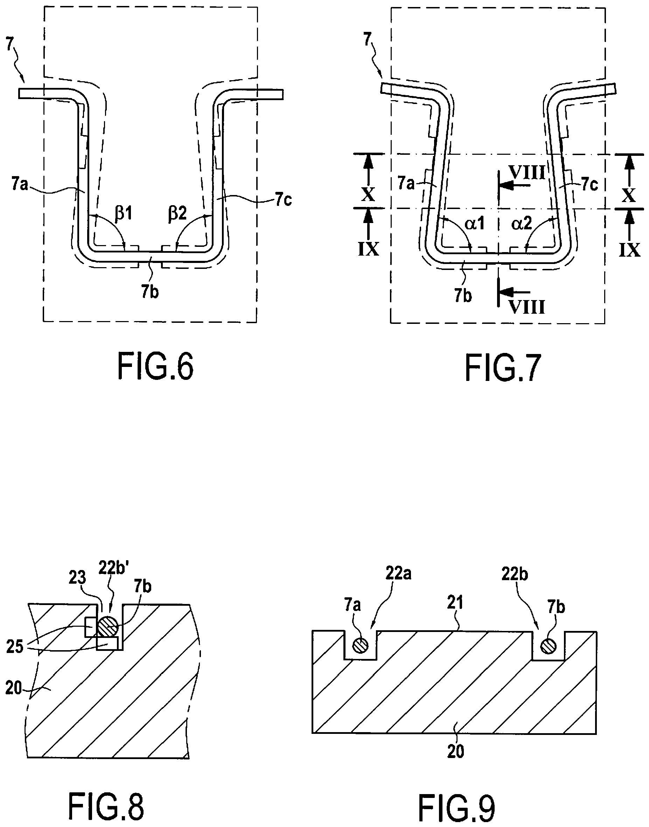

As shown in FIG. 6, in an unstressed state, before its introduction into the mold 20, the insert 3 may have an angle β₁ between the first and second segments 7a, 7b greater than the angle α₁ between the corresponding first and second segments 22a, 22b of the notch 22. It may also have an angle β₂ between the second and third segments 7b, 7c greater than the angle α₂ between the corresponding second and third segments 22b, 22c of the notch 22. In particular, the angles α₁ and α₂ may be acute, and the angles β₁ and β₂ may be straight.

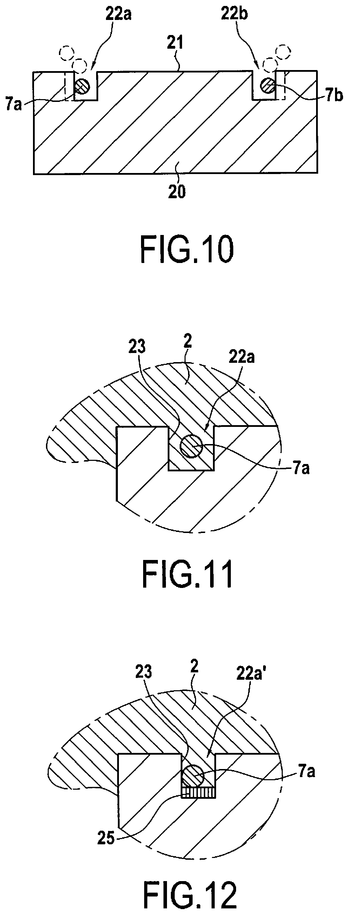

When the insert 3 is introduced into the mold 20, it may in particular be inserted into the notch 22. Due to the difference between the angles β₁ and β₂ in the unstressed state of the insert 3 and the corresponding angles α₁ and α₂ in the notch 22, the insert 3 may be, within the notch 22, under an elastic bending stress pressing one or more surfaces 10 of the insert against outer sides 23 of the notch 22, in particular in the narrower central portions 22a', 22b', 22c', as shown in FIGS. 7-12. Consequently, in a subsequent foam molding step, wherein the foam material 2 may be introduced into and molded within the mold 20 with the insert 3 still held within the notch 22, as shown in FIGS. 11 and 12, these surfaces 10 may not be covered by the foam material 2. After a subsequent unmolding step in which the foam material 2, with the insert 3 embedded therein, may be extracted from the mold 20, these surfaces may thus still be exposed, emerging from the foam material 2 within each cavity 5 to facilitate attachment to the solid bodies 4 in an assembly step, as shown in FIGS. 3 and 4.

As shown in FIGS. 8, 10 and 12, the magnets 25 may in particular be located adjacent to the narrower central portions 22a', 22b' and 22c' of the notch 22. In particular, they may be located at the bottom 24 of the notch 22 at the narrower central portions 22a', 22b' and 22c', as well as at an outer side 23 of the notch 22 at the narrower central portion 22b' of the second segment 22b of the notch 22. In these locations, the magnets 25 may magnetically hold the insert 3 within the notch 22 during the foam molding step, preventing in particular that the insert 3 snaps out of the notch 22 under its elastic bending stress.

Those skilled in the art will recognize that the present invention may be manifested in a variety of forms other than the specific embodiments described and contemplated herein. Accordingly, departure in form and detail may be made without departing from the scope of the present invention as described in the appended claims.

## Claims

1. Process for manufacturing a foam article (1) with an embedded insert (3), **characterized by** comprising a foam molding step in which a foam material (2) is molded within a mold (20) while the insert (3) is held under elastic stress against an inner surface of the mold (20).

2. Process for manufacturing a foam article (1) with an embedded insert (3) according to claim 1, wherein the insert (3) is elongated and is held under elastic bending stress against the inner surface of the mold (20) during the foam molding step.

3. Process for manufacturing a foam article (1) with an embedded insert (3) according to claim 2, wherein the insert (3) is a metal wire.

4. Process for manufacturing a foam article (1) with an embedded insert (3) according to claim 3, wherein the insert is magnetically held during the foam molding step.

5. Process for manufacturing a foam article (1) with an embedded insert (3) according to any one of claims 2 to 4, wherein the insert (3) is held within a notch (22) in the mold (22), and the inner surface of the mold (20) against which the insert (3) is held under elastic bending stress is a side (23) of the notch (22).

6. Process for manufacturing a foam article (1) with an embedded insert (3) according to claim 5, wherein the insert (3) comprises at least two segments (7a,7b) which are at an angle (β₁) to each other in an unstressed state of the insert (3), and the notch (22) comprises two corresponding segments (22a,22b) at a different angle (α₁) to each other, exerting the elastic bending stress on the insert (3) within the notch (22).

7. Process for manufacturing a foam article (1) with an embedded insert (3) according to claim 6, wherein the insert (3) includes a U-shaped part (7).

8. Process for manufacturing a foam article (1) with an embedded insert (3) according to any one of claims 1 to 7, further comprising an assembly step wherein a solid body (4) is attached to the insert (3) after the foam molding step.

9. Process for manufacturing a foam article (1) with an embedded insert (3) according to claim 8, wherein the solid body (4) is a sensor.

10. Process for manufacturing a foam article (1) with an embedded insert (3) according to claim 9, wherein the foam article (1) is a seat cushion and the solid body (4) is an occupant detection sensor.

## Patentansprüche

1. Verfahren zur Herstellung eines Schaumstoffartikels (1) mit einem eingebetteten Einsatz (3), **dadurch gekennzeichnet, dass** es einen Schaumformungsschritt umfasst, bei welchem ein Schaumstoffmaterial (2) innerhalb einer Form (20) geformt wird, während der Einsatz (3) unter elastischer Belastung gegen eine innere Oberfläche der Form (20) gehalten wird.

2. Verfahren zur Herstellung eines Schaumstoffartikels (1) mit einem eingebetteten Einsatz (3) nach Anspruch 1, wobei der Einsatz (3) länglich ist und während des Schaumformungsschritts unter elastischer Biegebelastung gegen die innere Oberfläche der Form (20) gehalten wird.

3. Verfahren zur Herstellung eines Schaumstoffartikels (1) mit einem eingebetteten Einsatz (3) nach Anspruch 2, wobei der Einsatz (3) ein Metalldraht ist.

4. Verfahren zur Herstellung eines Schaumstoffartikels (1) mit einem eingebetteten Einsatz (3) nach Anspruch 3, wobei der Einsatz während des Schaumformungsschritts magnetisch gehalten wird.

5. Verfahren zur Herstellung eines Schaumstoffartikels (1) mit einem eingebetteten Einsatz (3) nach einem der Ansprüche 2 bis 4, wobei der Einsatz (3) innerhalb einer Einkerbung (22) in der Form (22) gehalten wird und die innere Oberfläche der Form (20), gegen welche der Einsatz (3) unter elastischer Biegebelastung gehalten wird, eine Seite (23) der Einkerbung (22) ist.

6. Verfahren zur Herstellung eines Schaumstoffartikels (1) mit einem eingebetteten Einsatz (3) nach Anspruch 5, wobei der Einsatz (3) mindestens zwei Segmente (7a, 7b) umfasst, die in einem unbelasteten Zustand des Einsatzes (3) in einem Winkel (β₁) zueinander angeordnet sind, und die Einkerbung (22) zwei entsprechende Segmente (22a, 22b) in einem unterschiedlichen Winkel (α₁) zueinander umfasst, welche die elastische Biegebelastung auf den Einsatz (3) innerhalb der Einkerbung (22) ausüben.

7. Verfahren zur Herstellung eines Schaumstoffartikels (1) mit einem eingebetteten Einsatz (3) nach Anspruch 6, wobei der Einsatz (3) einen U-förmigen Teil (7) beinhaltet.

8. Verfahren zur Herstellung eines Schaumstoffartikels (1) mit einem eingebetteten Einsatz (3) nach einem der Ansprüche 1 bis 7, ferner umfassend einen Montageschritt, in welchem ein Festkörper (4) nach dem Schaumformungsschritt an dem Einsatz (3) angebracht wird.

9. Verfahren zur Herstellung eines Schaumstoffartikels (1) mit einem eingebetteten Einsatz (3) nach Anspruch 8, wobei der Festkörper (4) ein Sensor ist.

10. Verfahren zur Herstellung eines Schaumstoffartikels (1) mit einem eingebetteten Einsatz (3) nach Anspruch 9, wobei der Schaumstoffartikel (1) ein Sitzpolster ist und der Festkörper (4) ein Insassen-Erkennungssensor ist.

## Revendications

1. Procédé pour fabriquer un article en mousse (1) avec un insert (3) encastré, **caractérisé en ce qu'**il comprend une étape de moulage de mousse dans laquelle un matériau en mousse (2) est moulé à l'intérieur d'un moule (20) alors que l'insert (3) est maintenu sous contrainte élastique contre une surface interne du moule (20).

2. Procédé pour fabriquer un article en mousse (1) avec un insert (3) encastré selon la revendication 1, dans lequel l'insert (3) est allongé et est maintenu sous contrainte de flexion élastique contre la surface interne du moule (20) pendant l'étape de moulage de mousse.

3. Procédé pour fabriquer un article en mousse (1) avec un insert (3) encastré selon la revendication 2, dans lequel l'insert (3) est un fil métallique.

4. Procédé pour fabriquer un article en mousse (1) avec un insert (3) encastré selon la revendication 3, dans lequel l'insert est maintenu, par voie magnétique, pendant l'étape de moulage de mousse.

5. Procédé pour fabriquer un article en mousse (1) avec un insert (3) encastré selon l'une quelconque des revendications 2 à 4, dans lequel l'insert (3) est maintenu à l'intérieur d'une encoche (22) dans le moule (22), et la surface interne du moule (20) contre lequel l'insert (3) est maintenu sous contrainte de flexion élastique est un côté (23) de l'encoche (22).

6. Procédé pour fabriquer un article en mousse (1) avec un insert (3) encastré selon la revendication 5, dans lequel l'insert (3) comprend au moins deux segments (7a, 7b) qui sont à un angle (β₁) l'un par rapport à l'autre dans un état non contraint de l'insert (3), et l'encoche (22) comprend deux segments (22a, 22b) correspondants, à un angle différent (α₁) l'un par rapport à l'autre, exerçant la contrainte de flexion élastique sur l'insert (3) à l'intérieur de l'encoche (22).

7. Procédé pour fabriquer un article en mousse (1) avec un insert (3) encastré selon la revendication 6, dans lequel l'insert (3) comprend une partie en forme de U (7).

8. Procédé pour fabriquer un article en mousse (1) avec un insert (3) encastré selon l'une quelconque des revendications 1 à 7, comprenant en outre une étape d'assemblage, dans laquelle un corps solide (4) est fixé à l'insert (3) après l'étape de moulage de mousse.

9. Procédé pour fabriquer un article en mousse (1) avec un insert (3) encastré selon la revendication 8, dans lequel le corps solide (4) est un capteur.

10. Procédé pour fabriquer un article en mousse (1) avec un insert (3) encastré selon la revendication 9, dans lequel l'article en mousse (1) est un coussin de siège et le corps solide (4) est un capteur de détection d'occupant.
